# EUROPEAN PATENT APPLICATION

(11) **EP 3 316 138 A1**
(43) Date of publication of application: **02.05.2018**
(21) Application number: 17001638.0
(22) Date of filing: 05.10.2017
(51) Int. Cl.: G06F 11/20, G06F 11/34

(54) **INFORMATION PROCESSING APPARATUS FOR DATA MIRRORING, METHOD OF CONTROLLING THE SAME, AND STORAGE MEDIUM**

(30) Priority: 26.10.2016 JP 2016209888
(71) Applicant: CANON KABUSHIKI KAISHA, Tokyo (JP)
(72) Inventor: Akiba, Tomohiro, Tokyo (JP)
(74) Representative: WESER & Kollegen

(57) **Abstract**

An information processing apparatus is connected to a plurality of storage devices and performs mirroring between the plurality of storage devices. In accordance with a data writing command, a writing command is issued to each of the plurality of storage devices, and, in a case that a response indicating writing completion for the writing command is received from a first storage device out of the plurality of storage devices, a predetermined amount of time is waited for the response from the other storage device. When the response is not received from the other storage device within the predetermined amount of time, a response indicating writing completion is notified to an issuing source of the data writing command, and after the notification, data stored in the first storage device is mirrored by copying it to the other storage device.

## Description

### BACKGROUND OF THE INVENTION

### Field of the Invention

The present invention relates to an information processing apparatus, a method of controlling the same, and a storage medium.

### Description of the Related Art

In recent years, in conjunction with the spread of SSDs (solid state drives), SSDs have come to be equipped in image forming apparatuses as an auxiliary storage device. When compared to a storage device used conventionally such as an HDD (hard disk drive), an SSD is superior in points such as access performance, heat generation, motion sound, shock resistance, power consumption, and size. In contrast, there are also points where it is inferior, such as restriction on a rewrite count, a memory capacity, and cost. Hereinafter, HDD and SSD are taken as generic terms, and while they may be represented as a disk or a drive, these are assumed to be the same to the extent that it is not particularly specified.

Meanwhile, a mirroring device that uses disks is a device that improves fault tolerance by making use of the fact it is rare for two disks to malfunction at the same time. Access performance and fault tolerance are normally expected in such a mirroring device, and it is mounted with storage devices having the same performance. However, in an image forming apparatus, from a cost perspective there are cases where storage devices having different performance as with an HDD and an SSD, for example, are combined and mounted as a mirroring device.

In the mirroring device, there is a master drive that is used as a primary drive and a backup drive that is used as a secondary drive, and reading is performed from the master drive and writing is performed to both drives. In the case where there is a problem with the master drive, usage is performed after switching the primary and secondary drives.

For example, a case in which the SSD is used as the master drive and the HDD is used as the backup drive is envisioned. Because there are advantages and disadvantages in access performance for each drive, a phenomenon occurs in which the SSD completes a write having a small size (random access) first, and the HDD completes a write having a large size (sequential access) first.

For example, in Japanese Patent Laid-Open No. 2009-223355, processing, in which such advantages or disadvantages are made use of, is performed when reading data. In other words, reading performance on the whole is improved by causing an operation such as reading a first half portion of data from the SSD which has high random access performance, and reading a second half portion from the HDD which has high sequential access performance.

If there is a writing command that is made to the mirroring device from a host, a writing command is issued to both drives, and a response is made to the host after writing to both drives has completed. Accordingly, the time it will take until a response is made is determined by the performance of the drive whose processing is slower, and when a drive having lower access performance is used, the access performance will define the access performance of the mirroring device.

### SUMMARY OF THE INVENTION

An aspect of the present invention is to eliminate the above-mentioned problems with the conventional techniques.

A feature of the present invention is to provide a technique that can suppress a decrease of access performance of a device as a whole even in a case of performing mirroring by using a plurality of storage devices that have access performance different to each other.

The present invention in its first aspect provides an information processing apparatus as specified in claims 1 to 8.

The present invention in its second aspect provides a method as specified in claims 9 to 16.

Further features of the present invention will become apparent from the following description of exemplary embodiments with reference to the attached drawings.

### BRIEF DESCRIPTION OF THE DRAWINGS

The accompanying drawings, which are incorporated in and constitute a part of the specification, illustrate embodiments of the invention and, together with the description, serve to explain the principles of the invention.
FIG. 1 is a block diagram for explaining a configuration of a mirroring device according to a first embodiment of the present invention.
FIG. 2 is a sequence chart for explaining a write operation to two storage devices in the mirroring device according to the first embodiment of the present invention.
FIG. 3 is a flowchart for describing a write operation to a plurality of storage devices in the mirroring device according to the first embodiment of the present invention.
FIG. 4 is a sequence chart for explaining a write operation to two storage devices in the mirroring device according to a second embodiment of the present invention.
FIG. 5 is a flowchart for describing a write operation to a plurality of storage devices in the mirroring device according to the second embodiment of the present invention.

### DESCRIPTION OF THE EMBODIMENTS

Embodiments of the present invention will now be described hereinafter in detail, with reference to the accompanying drawings. It is to be understood that the following embodiments are not intended to limit the claims of the present invention, and that not all of the combinations of the aspects that are described according to the following embodiments are necessarily required with respect to the means to solve the problems according to the present invention. Note that, although, in the present embodiment, explanation is given in which a mirroring device that combines an SSD and an HDD is taken as an example, but the present invention is not limited to that.

### (First Embodiment)

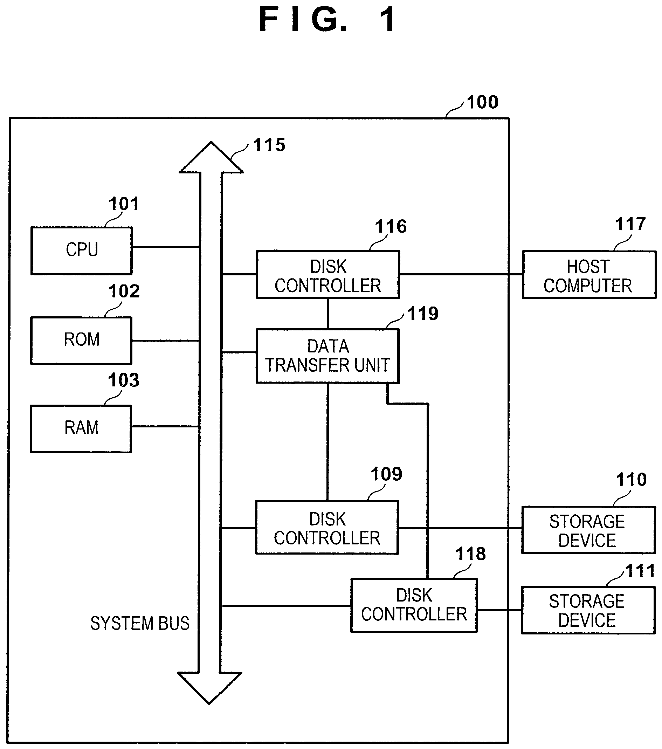

FIG. 1 is a block diagram for explaining a configuration of a mirroring device 100 according to a first embodiment of the present invention. In the present embodiment, explanation is given by taking an information processing apparatus equipped with such a mirroring device as an example.

The mirroring device 100 is equipped with a CPU 101 that deploys a program stored in a ROM 102 or a storage device 110 such as a hard disk for example into a RAM 103, and then executes it. The CPU 101 comprehensively controls each device connected to a system bus 115. Here, a plurality of non-volatile storage devices can be connected, and a storage device 111 is optionally connected. Note that storage devices 110 and 111 are both non-volatile storage devices that are connected to the system bus 115 via a disk controller 109 and a disk controller 118 respectively, and control of reading and writing with respect to each storage device is performed in accordance with these controllers. Here, control is performed such that the same data is written to the storage devices 110 and 111, but one is a primary storage and the other is a secondary storage. Because the primary storage and the secondary storage are switched in accordance with a malfunction or attachment/detachment or the like, it is assumed that a case of representing a primary storage or a secondary storage below means representing either of the storage devices 110 and 111.

The RAM 103 functions as a work area and a main memory of the CPU 101, a buffer for data for which reading or writing is performed with respect to the storage devices 110 and 111, or the like. The mirroring device 100 is connected to a host computer (an external device) 117 via a disk controller 116, and transfers data that is read from or written to the storage devices 110 and 111. A data transfer unit 119 is connected to the disk controllers 109, 116, and 118, and performs data transfers between these disk controllers.

Note that, in the first embodiment, the host computer 117 and the storage devices 110 and 111 are connected to an exterior of the mirroring device 100, but may be contained in the mirroring device 100.

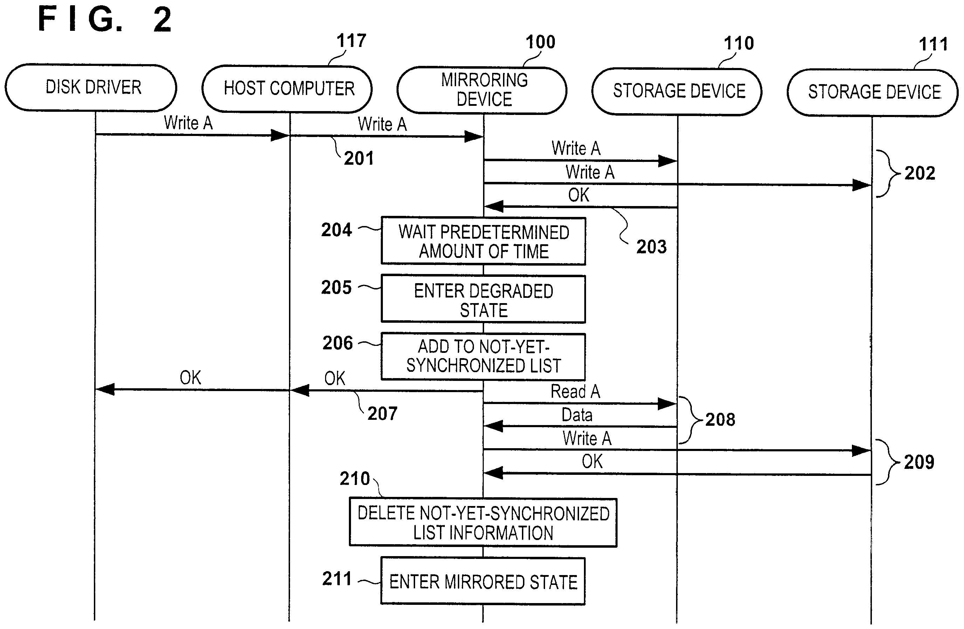

FIG. 2 is a sequence chart for explaining a write operation to two storage devices in the mirroring device 100 according to the first embodiment of the present invention.

When data is inputted by a user of the host computer 117, at reference numeral 201 a write command (Write A) is issued for writing that data to the mirroring device 100 from the host computer 117 via a disk driver. The mirroring device 100, upon receiving the write command, at reference numeral 202 issues a write command for writing the data to both of the storage devices 110 and 111. Here, there is a difference in the write speed in accordance with a write size or timing, access performance of the storage devices 110 and 111, or the like. Accordingly, at reference numeral 203, it is assumed that there is a writing completion response from one of the storage devices (assumed to be the storage device 110 here).

Next, at reference numeral 204, the mirroring device 100 waits a predetermined amount of time for a writing completion response to come from the other storage device 111. If there is no writing completion response from the storage device 111 even after waiting for the predetermined amount of time, at reference numeral 205, the mirroring device 100 sets an internal state to a degraded state indicating that it is operating by only one storage device. At reference numeral 206, it holds, in the RAM 103 for example, a write position and data size included in the writing command, as well as something indicating that writing to the storage device 111 has not completed, as a not-yet-synchronized list. At reference numeral 207, it notifies writing completion to the host computer 117.

Next, at reference numeral 208, upon confirming that there is information in the not-yet-synchronized list, the mirroring device 100 reads from the storage device 110 data (Data A) corresponding to the write position and data size registered in the not-yet-synchronized list. Here, a read command (Read A) is issued to the storage device 110, and data (Data A) is read from the storage device 110. At reference numeral 209, a writing command (Write A) for writing the data to the storage device 111 is issued to the storage device 111, and the data (Data A) is written to the storage device 111. In this way, when the writing succeeds, at reference numeral 210, the information registered in the not-yet-synchronized list is deleted. At reference numeral 211, the internal state of the mirroring device 100 is changed to a mirrored state indicating that synchronization of both of the storage devices 110 and 111 has been achieved.

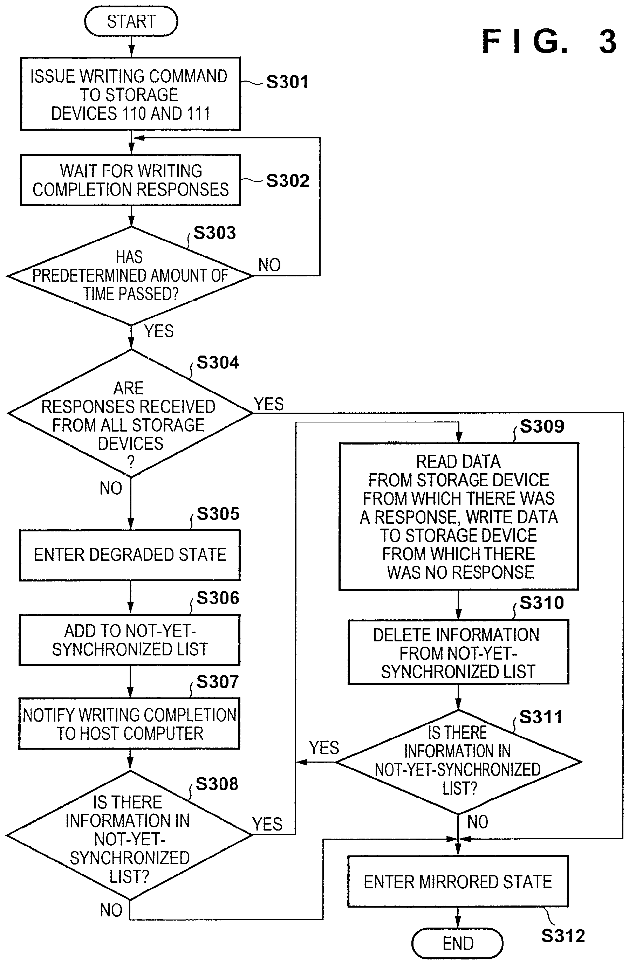

FIG. 3 is a flowchart for describing a write operation to a plurality of storage devices in the mirroring device 100 according to the first embodiment of the present invention. Note that the processing indicated in this flowchart is achieved by the CPU 101 deploying a program stored in the ROM 102 into the RAM 103, and executing it. The processing is started in accordance with receiving data and a writing command from the host computer 117.

Firstly, in step S301, the CPU 101 issues a writing command to the two storage devices 110 and 111 in order to write the data received from the host computer 117 to both of the storage device 110 and the storage device 111. The processing proceeds to step S302, and the CPU 101 waits for writing completion responses from the storage devices 110 and 111. In step S303, the CPU 101 determines whether or not a predetermined amount of time has passed, and when the predetermined amount of time has passed the processing proceeds to step S304, and otherwise the processing returns to step S302. In step S304, the CPU 101 determines whether or not writing completion responses have been received from both of the two storage devices 110 and 111, and this processing ends when the writing completion responses have been received from both, but when that is not the case the processing proceeds to step S305. Explanation is given here assuming that a writing completion response has been received from just one of the devices. When a writing completion response is not received from either of the two storage devices 110 and 111, it is processed as an error.

In step S305, the CPU 101 changes the state of the mirroring device to the degraded state indicating that it is operating by only one storage device. In this manner, when there is a writing completion response from only one, there are many cases where it is possible to continue processing by using the disk that gave the response. In such a case, it is possible to hold data in the disk that made the writing completion response, and continue operation using only the disk that made the writing completion response. To cause the so-called degraded state to be identified in the mirroring device, the device is set to the degraded state. Accordingly, it is possible to continue processing by using only the disk that made the writing completion response, without waiting for a response for a disk that made no writing completion response. The processing proceeds to step S306, and the CPU 101 stores in the RAM 103, for example, identification information of the storage device from which a writing completion response has not been received as well as the write position and data size included in the writing command as described above, as not-yet-synchronized list information. The processing proceeds to step S307, and the CPU 101 notifies writing completion to the host computer 117, which is the issuing source of the writing command.

Next, the processing proceeds to step S308, and the CPU 101 determines whether or not information is registered in the not-yet-synchronized list of the RAM 103, and when information is registered the processing proceeds to step S309, and when that is not the case the processing proceeds to step S312. In step S309, the CPU 101 reads data corresponding to the write position and data size registered in the not-yet-synchronized list from the storage device for which a writing completion response was received (for example, the storage device 110). Copy processing is then executed to write to a storage device from which a writing completion response was not received (for example, the storage device 111). When this writing succeeds, the processing proceeds to step S310, and the CPU 101 removes the information from the not-yet-synchronized list. The processing proceeds to step S311, it is determined whether or not other information is present in the not-yet-synchronized list, and if so the processing returns to step S309 to execute similar processing. The processing of step S311 is for making application possible in a case of performing mirroring by using three or more storage devices, for example. In this way, when there ceases to be information registered in the not-yet-synchronized list, the processing proceeds to step S312, and the CPU 101 sets the state of the mirroring device to the mirrored state indicating that synchronization of both of the storage devices 110 and 111 has been achieved, and this processing ends.

By virtue of the first embodiment as explained above, when performing mirroring by using a plurality of storage devices, in writing processing, it is possible to notify write completion corresponding to write processing to the storage device with the highest performance. By this, even in a case where storage devices having different performance to each other are used, there is an effect that it is possible to suppress a decrease of access performance of the mirroring device due to a storage device having lower performance.

Note that, in the first embodiment, a degraded state in which synchronization of both of the storage devices has not been achieved is temporarily generated. In this manner, for a user who places importance on the two storage devices not being synchronized, configuration may also be taken such that a user can select whether or not to permit a transition to the degraded state. In such a case, operation of the first embodiment described above is taken if the user permits the transition to the degraded state, but when permission is not given, a response is made to the host computer only after writing to all of the storage devices has completed.

In addition, configuration may also be taken such that the predetermined amount of time of step S303 described above can be set by a user to any value. By this, a user can achieve a balance between synchronization of data and an access period that the user desires.

### (Second Embodiment)

Next, a second embodiment of the present invention will be described. In the second embodiment, explanation is given of an example in which there is a high-speed writing mode for executing a further higher speed write operation, which is one characteristic operation of the present invention. Note that, because configuration of the mirroring device according to the second embodiment is the same as the case of the first embodiment described above, explanation thereof is omitted.

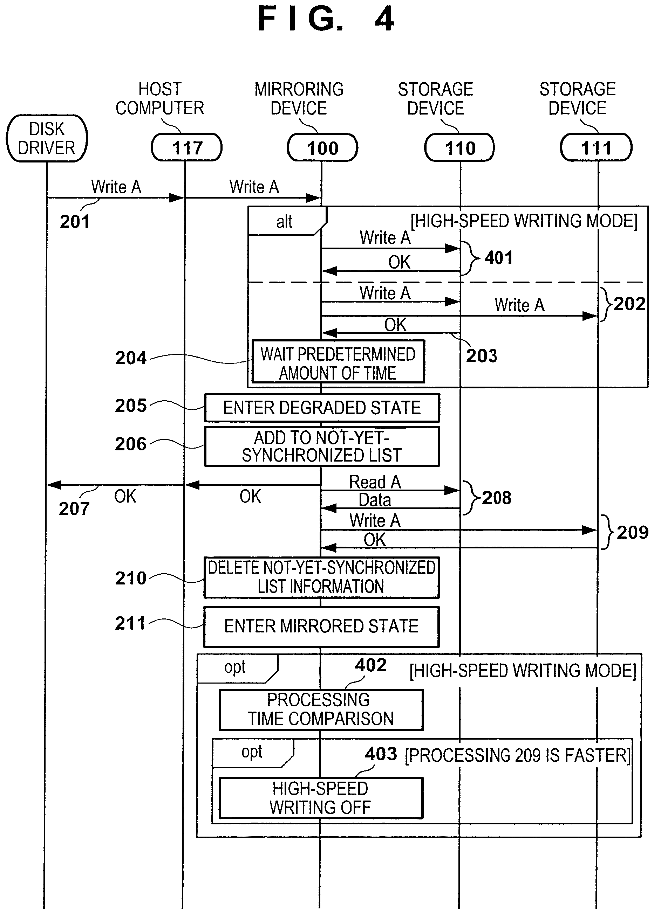

FIG. 4 is a sequence chart for explaining a write operation to two storage devices in the mirroring device 100 according to the second embodiment of the present invention. Note that, in FIG. 4, portions that are the same as those in FIG. 2 described above are indicated by the same reference numeral, and explanation thereof is omitted.

The mirroring device 100 according to the second embodiment holds information indicating whether or not the high-speed writing mode is set internally, and information on which of the storage devices 110 and 111 to prioritize in the high-speed writing mode. These pieces of information may be provided in advance from the host computer 117, and a storage device that can write data faster may be automatically determined from, for example, a number of times processing for waiting the predetermined amount of time described above (204) has been executed. For example, if the storage device 110 is an SSD and the storage device 111 is an HDD, prioritizing the storage device 110 in the high-speed writing mode is set.

In FIG. 4, when a writing command (Write A) for writing data is issued from the host computer 117 to the mirroring device 100 at reference numeral 201, the mirroring device 100 determines whether or not it is in the high-speed writing mode. Here, if it is not in the high-speed writing mode, the operation of reference numerals 202 through 211 is performed, similarly to in the previously described first embodiment.

Meanwhile, in the case of the high-speed writing mode, at reference numeral 401, a writing command is issued only to the prioritized storage device (it is assumed here to be the storage device 110, for example). The operation of reference numerals 205 through 211, that has been explained with reference to FIG. 2, is performed. In other words, because writing of data to the storage device 111 is not executed, the mirroring device 100 sets an internal state to the degraded state, indicating that it is operating by only one storage device. Information is registered to the not-yet-synchronized list at reference numeral 206, and mirroring to the storage device 111 is performed at reference numerals 208 through 209. When the mirroring succeeds, the information of the not-yet-synchronized list is deleted, and the mirroring device 100 sets the internal state to the mirrored state.

Additionally, in the case of the high-speed writing mode, at reference numeral 402, a comparison is made for processing time between the processing for writing to the storage device 110 at reference numeral 401 and the processing for writing to the storage device 111 at reference numeral 209. When the processing time for the processing for writing to the storage device 111 at reference numeral 209 is smaller, the high-speed writing mode is set to off at reference numeral 403.

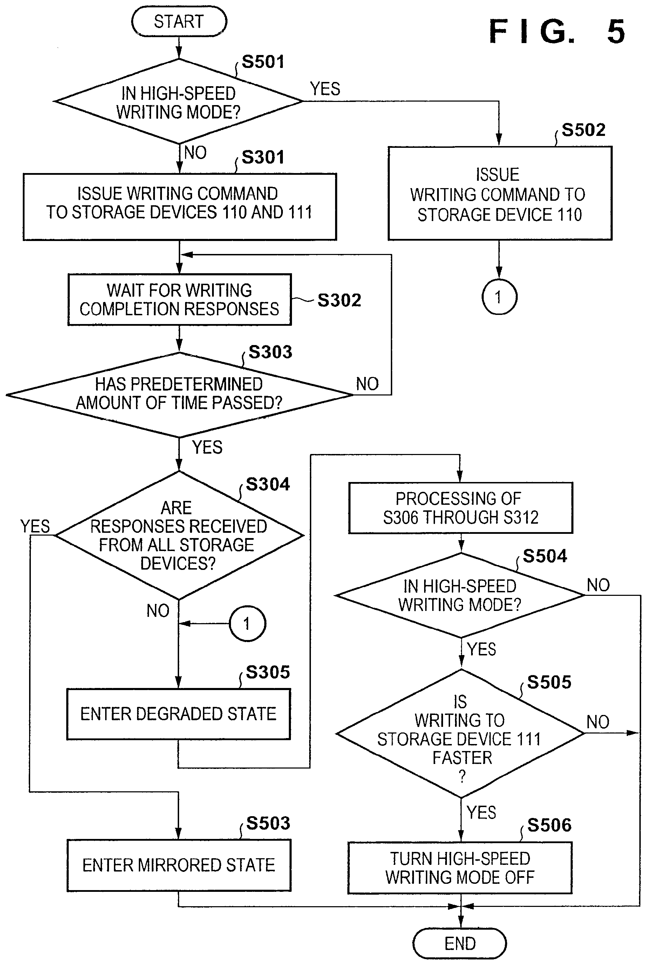

FIG. 5 is a flowchart for describing a write operation to a plurality of storage devices in the mirroring device 100 according to the second embodiment of the present invention. Note that the processing indicated in this flowchart is achieved by the CPU 101 deploying a program stored in the ROM 102 into the RAM 103, and executing it. The processing is started in accordance with receiving data and a writing command from the host computer 117. Note that, in FIG. 5, portions that are the same as those in FIG. 3 are indicated by the same reference numeral, and explanation thereof is omitted. The processing is started in accordance with receiving data and a writing command from the host computer 117.

Firstly, in step S501, the CPU 101 determines whether or not the high-speed writing mode has been set in the RAM 103. When it is determined in step S501 that the high-speed writing mode has not been set, the processing proceeds to step S301, and the processing of step S301 through step S312, as described above in the first embodiment, is executed. At this point, in step S304, if writing of data to all of the storage devices has completed within the predetermined amount of time, the processing proceeds to step S503, and the CPU 101 sets the state of the mirroring device 100 to the mirrored state, and this processing ends.

When it is determined in step S501 that the high-speed writing mode is set, the processing proceeds to step S502, and the CPU 101 issues a writing command to only the storage device to prioritize (assumed here to be the storage device 110 for example), and the processing proceeds to step S305. In step S305, the CPU 101 changes the state of the mirroring device 100 to the degraded state indicating that it is operating by only one storage device. As explained with reference to FIG. 3, the processing of step S306 through step S312 is executed, and in step S309 mirroring processing to the storage device 111 is performed by writing data that was written to the storage device 110 in step S502 to the storage device 111.

When the mirroring processing succeeds in this way, the processing proceeds to step S504, and the CPU 101 determines whether or not the high-speed writing mode is set in the RAM 103, similarly to in step S501. When it is determined in step S504 that the high-speed writing mode is not set, the processing ends. Meanwhile, when it is determined that the high-speed writing mode is set, the processing proceeds to step S505, and the CPU 101 compares the amount of time required for the processing that wrote the data to the storage device 110 in step S502, and the amount of time required for the processing that wrote the same data to the storage device 111 in step S309. When it is determined that the amount of time required for processing that wrote the same data to the storage device 111 is shorter, the processing proceeds to step S506, the setting of the high-speed writing mode is turned off, and this processing ends. Here, because the amount of time required for the write processing of the storage device to prioritize (for example the storage device 110) is longer, there is no meaning in a high-speed writing mode where the storage device 110 is caused to be prioritized. Meanwhile, when it is determined that the amount of time required for processing that wrote the same data to the storage device 111 is longer, this processing ends while maintaining the high-speed writing mode.

Note that, configuration may be taken to, in step S506, perform an alert that the high-speed writing mode is turned off (released) because a storage device having slower access performance has been set by the user to be prioritized. In this case, configuration may be taken to also present to the user information indicating which storage device has higher access performance.

By virtue of the second embodiment as explained above, by employing a high-speed writing mode for writing data by causing a storage device that has higher speed access performance to be prioritized, it is possible to return a writing completion response to a host computer at a timing in accordance with the higher speed access performance. With respect to the other storage device that is registered in the not-yet-synchronized list, it is possible to perform mirroring by successively writing data.

In addition, when the high-speed writing mode is mistakenly set to prioritize a storage device having slower access performance, it is possible to turn the high-speed writing mode off.

Note that the high-speed writing mode is set to off in step S506 of FIG. 5, but for example configuration may be taken such that, when the high-speed writing mode for designating to prioritize a storage device is set in advance by an instruction from the host computer 117, information for turning the high-speed writing mode off is notified to the host computer 117. By this, it is possible to notify a user of the host computer 117 that a storage device having slow access performance has been designated as the storage device to prioritize in the high-speed writing mode.

In addition, configuration may be taken to store model numbers of the storage devices 110 and 111, and, when either is replaced, release the high-speed writing mode if the high-speed writing mode is set.

### Other Embodiments

Embodiments of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An information processing apparatus operable to connect to a plurality of storage devices and perform mirroring between the plurality of storage devices, the apparatus comprising:
first issuance means (S301) for, in accordance with a data writing command, issuing a writing command to each of the plurality of storage devices;
waiting means (S302; S303) for, in a case that a response indicating writing completion for the writing command is received from a first storage device out of the plurality of storage devices, waiting a predetermined amount of time for a response from another storage device out of the plurality of storage devices;
notification means (S307) for, when a response is not received from the other storage device out of the plurality of storage devices within the predetermined amount of time, notifying a response indicating writing completion to an issuing source of the data writing command; and
control means (S312) for, after a notification by said notification means, performing mirroring by copying the data stored in the first storage device to the other storage device.

2. The information processing apparatus according to claim 1, wherein said notification means comprises:
registration means (S306) for, when a response is not received from the other storage device out of the plurality of storage devices within the predetermined amount of time, registering information of a data size and a write position of the data, and information for identifying a storage device for which writing has not completed,
wherein said control means (S309), based on the information registered by said registration means, copies data stored in the first storage device to the storage device for which writing has not completed, and deletes the information registered by said registration means when the copying succeeds.

3. The information processing apparatus according to claim 1 or 2, further comprising:
setting means (S305) for setting a degraded state indicating not being in a mirrored state, when the response from the other storage device out of the plurality of storage devices is not received during the predetermined amount of time.

4. The information processing apparatus according to any one of claims 1 to 3, further comprising:
determination means (S501) for determining whether or not a high-speed writing mode for designating to prioritize a storage device; and
second issuance means (S502) for, in accordance with the data writing command, issuing a writing command to the prioritized storage device, when it is determined by said determination means that the high-speed writing mode is set.

5. The information processing apparatus according to claim 4, further comprising:
release means (S506) for, when it is determined by said determination means that the high-speed writing mode is set, comparing a first amount of time required for writing the data to the prioritized storage device and a second amount of time required for writing the data to a storage device that is not the prioritized storage device, and releasing the high-speed writing mode when the second interval is shorter than the first interval.

6. The information processing apparatus according to claim 5, wherein, if the high-speed writing mode is set in accordance with an instruction from an external device, said release means further notifies the external device that the high-speed writing mode has been released.

7. The information processing apparatus according to claim 5, further comprising:
alert means for alerting a user that access performance of the prioritized storage device is less than access performance of another storage device when said release means releases the high-speed writing mode.

8. The information processing apparatus according to any one of claims 1 to 7, wherein the data writing command is set from a host computer.

9. A method of controlling an information processing apparatus that is connected to a plurality of storage devices and performs mirroring between the plurality of storage devices, the method comprising:
a first issuance step of, in accordance with a data writing command, issuing a writing command to each of the plurality of storage devices;
a waiting step of, in a case that a response indicating writing completion for the writing command is received from a first storage device out of the plurality of storage devices, waiting a predetermined amount of time for a response from another storage device out of the plurality of storage devices;
a notification step of, when the response is not received from the other storage device out of the plurality of storage devices within the predetermined amount of time, notifying a response indicating writing completion to an issuing source of the data writing command; and
a control step of, after a notification, performing mirroring by copying the data stored in the first storage device to the other storage devices out of the plurality of storage devices.

10. The method according to claim 9, wherein the notification step comprising:
a registration step of, when a response is not received from the other storage device out of the plurality of storage devices within the predetermined amount of time, registering information of a data size and a write position of the data, and information for identifying a storage device for which writing has not completed,
wherein the control step, based on the information registered in the registration step, copies data stored in the first storage device to the storage device for which writing has not completed, and deletes the information registered in the registration step when the copying succeeds.

11. The method according to claim 9 or 10, further comprising:
a setting step of setting a degraded state indicating not being in a mirrored state, when the response from the other storage device out of the plurality of storage devices is not received during the predetermined amount of time.

12. The method according to any one of claims 9 to 11, further comprising:
a determination step of determining whether or not a high-speed writing mode for designating to prioritize a storage device; and
a second issuance step of, in accordance with the data writing command, issuing a writing command to the prioritized storage device, when it is determined in the determination step that the high-speed writing mode is set.

13. The method according to claim 12, further comprising:
a release step of, when it is determined in the determination step that the high-speed writing mode is set, comparing a first amount of time required for writing the data to the prioritized storage device and a second amount of time required for writing the data to a storage device that is not the prioritized storage device, and releasing the high-speed writing mode when the second interval is shorter than the first interval.

14. The method according to claim 13, wherein, if the high-speed writing mode is set in accordance with an instruction from an external device, the release step further notifies the external device that the high-speed writing mode has been released.

15. The method according to claim 13, further comprising:
an alert step of alerting a user that access performance of the prioritized storage device is less than access performance of another storage device when the release step releases the high-speed writing mode.

16. The method according to any one of claims 9 to 15, wherein the data writing command is set from a host computer.

17. A computer-readable storage medium storing a program for causing a processor to execute a method defined by any one of claims 9 to 16.
